# EUROPÄISCHE PATENTSCHRIFT

(11) **EP 3 529 308 B1**
(45) Veröffentlichungstag und Bekanntmachung des Hinweises auf die Patenterteilung: **29.12.2021**
(21) Anmeldenummer: 17793850.3
(22) Anmeldetag: 13.10.2017
(51) Int. Cl.: C08L 27/16, C09D 127/16, G01N 21/77

(54) **SCHICHTEN ZUM NACHWEIS VON SAUERSTOFF**
LAYERS FOR DETECTION OF OXYGEN
COUCHES POUR LA DÉTECTION D'OXYGÈNE

(30) Priorität: 18.10.2016 DE 102016119810
(43) Veröffentlichungstag der Anmeldung: 28.08.2019
(73) Patentinhaber: Hamilton Bonaduz AG, 7402 Bonaduz (CH)
(72) Erfinder: ORTEGA SCHULTE, Claudius-Michael, 7402 Bonaduz (CH); SCHÖNFUSS, Dirk, 7015 Tamins (CH); WILLI, Spela, 7402 Bonaduz (CH); SIMONATO, Sara, 7000 Chur (CH)
(74) Vertreter: PATERIS Patentanwälte PartmbB
(86) Internationale Anmeldenummer: PCT/EP2017/076193
(87) Internationale Veröffentlichungsnummer: WO 2018/073120

(56) Entgegenhaltungen:
- WO-A1-2013/142886
- GB-A- 2 132 348
- US-A1- 2007 243 618
- US-A1- 2013 102 024

## Beschreibung

### Gebiet der Erfindung

Die Erfindung betrifft eine sauerstoffdurchlässige Schicht zum Nachweis von molekularem Sauerstoff. Die Erfindung betrifft weiter ein mehrschichtiges System zum Nachweis von molekularem Sauerstoff. Die Erfindung betrifft ferner ein Verfahren zur Herstellung der Schicht und die Verwendung der Schicht oder des mehrschichtigen Systems zum Nachweis von molekularem Sauerstoff.

### Hintergrund der Erfindung

Zum optischen Nachweis von molekularem Sauerstoff werden lumineszierende Indikatorverbindungen eingesetzt. Die Indikatorverbindungen können durch Lichteinstrahlung einer bestimmten Wellenlänge angeregt werden und einen Teil der absorbierten Lichtenergie als Lumineszenzstrahlung mit einer anderen Wellenlänge emittieren. In Anwesenheit von Sauerstoff wird die Lumineszenz der Indikatorverbindungen dynamisch gelöscht, indem Energie von den angeregten Indikatorverbindungen auf den Sauerstoff strahlungslos übertragen wird. Anhand der Löschung bzw. Verringerung der Lumineszenz der Indikatorverbindungen kann die Menge des im untersuchten Medium gelösten Sauerstoffs ermittelt werden. Dazu wird die Lumineszenz-Löschung beispielsweise durch Messen der Lumineszenz-Abklingzeit oder durch eine sogenannte Phasenmodulationstechnik detektiert. Bei entsprechender Kalibrierung kann dann über den mit der Stern-Volmer Gleichung beschriebenen Zusammenhang die Sauerstoffkonzentration im untersuchten Medium ermittelt werden.

Zur Quantifizierung von molekularem Sauerstoff werden die Indikatorverbindungen häufig in sauerstoffpermeablen Schichten (Membranen) durch Beimischung oder andere Inkorporationstechniken eingebettet oder physikalisch an solche Schichten adsorbiert. Die Schichten, die auch sensorische Schichten genannt werden, weisen häufig Silikon oder Polydimethylsiloxan als Trägermaterial auf und werden in der Regel mittels Sol-Gel-Verfahren hergestellt. Mittels Sol-Gel-Verfahren hergestellte Schichten sind jedoch mechanisch labil, so dass sie leicht zerstört werden können.

In vielen Einsatzbereichen müssen die sensorischen Schichten stabil gegen chemische Belastungen sein.

Die derzeit verbreiteten Schichten sind für Applikationen in verschiedenen Chemikalien nicht geeignet, da einige Chemikalien in die Schichten eindiffundieren und die physisch adsorbierten Indikatorverbindungen aus der polymeren Schicht herauslösen können. Das Herauslösen der Indikatorverbindungen aus der Schicht beeinträchtigt mit zunehmender Betriebsdauer die Qualität der Sauerstoffmessung und limitiert die Betriebsdauer der Schicht.

Eine hohe chemische Stabilität der Schichten ist daher notwendig, um eine gleichbleibende Qualität der Sauerstoffmessung zu sichern und die Betriebsdauer der Schichten zu verlängern.

Des Weiteren gibt es Anwendungen, bei denen die Menge von molekularem Sauerstoff in einem Gas oder einer Flüssigkeit in Echtzeit überwacht werden muss, um bei Abweichungen von einem gewünschten Sauerstoffgehalt sofort eingreifen zu können. Dazu gehört beispielsweise die Überprüfung des Sauerstoffgehalts in Trinkwasser, Lösungsmitteln oder lösungsmittelhaltigen Gasen. Für solche Anwendungen werden sensorische Schichten mit extrem kurzer Ansprechzeit benötigt.

Es besteht daher ein Bedarf an Schichten zum Nachweis von molekularem Sauerstoff, die eine hohe chemische und thermische Beständigkeit aufweisen und somit Applikationen in verschiedenen Chemikalien ermöglichen, und die eine sehr kurze Ansprechzeit aufweisen.

Die US 2007/243618 A1 beschreibt einen optochemischen Sensor, der zum Nachweis von Sauerstoff geeignet ist, wobei der Sensor ein gaspermeables, polymeres Trägermaterial und eine Indikatorverbindung, die in dem Trägermaterial dispergiert ist, umfasst. Das Trägermaterial kann Polyvinylidenfluorid (PVDF) oder Copolymere von PVDF aufweisen.

Die US 2013/102024 A1 beschreibt Indikatorverbindungen zum Nachweis von Sauerstoff, die durch Copolymerisation an ein Trägermaterial einer Schicht gebunden sind. Das Trägermaterial basiert auf Polyacrylamiden.

### Zusammenfassung der Erfindung

Die vorliegende Erfindung betrifft eine sauerstoffdurchlässige Schicht zum Nachweis von molekularem Sauerstoff, wobei die Schicht ein Trägermaterial aufweist, wobei das Trägermaterial Polyvinylidenfluorid oder ein Copolymer von Polyvinylidenfluorid ist,
dadurch gekennzeichnet, dass
in dem Trägermaterial mindestens ein Partikel umfasst ist, der ein Polymer oder ein Copolymer umfasst, wobei das Polymer oder Copolymer des Partikels eine chemisch kovalent gebundene Indikatorverbindung zum Nachweis von molekularem Sauerstoff aufweist, und wobei der Partikel mechanisch in dem Trägermaterial immobilisiert ist.

Die Erfindung betrifft weiter ein mehrschichtiges System zum Nachweis von molekularem Sauerstoff, das mindestens eine erste sauerstoffdurchlässige Schicht und eine zweite sauerstoffdurchlässige Schicht umfasst, wobei die erste Schicht eine Schicht gemäß der Erfindung ist und die zweite Schicht keine Indikatorverbindung zum Nachweis von molekularem Sauerstoff aufweist.

Die Erfindung betrifft ferner ein Verfahren zur Herstellung der Schicht gemäß der Erfindung, das Verfahren umfassend die Schritte
(a) Bereitstellen eines Gemischs, das ein Trägermaterial und mindestens einen Partikel aufweist, wobei das Trägermaterial Polyvinylidenfluorid oder ein Copolymer von Polyvinylidenfluorid ist und der Partikel ein Polymer oder ein Copolymer umfasst, wobei das Polymer oder Copolymer des Partikels eine chemisch kovalent gebundene Indikatorverbindung zum Nachweis von molekularem Sauerstoff aufweist, in einem Lösungsmittel, wobei das Lösungsmittel so ausgewählt ist, dass sich das Trägermaterial im Wesentlichen darin löst, während sich die Partikel im Wesentlichen nicht darin lösen;
(b) Homogenisieren des Gemischs bei einer Temperatur von etwa 15°C bis etwa 25°C unter Rühren;
(c) Rakeln des Gemischs auf eine Trägerfolie;
(d) Präzipitieren der Schicht durch Eintauchen der Trägerfolie mit dem Rakelat aus Schritt (c) in ein Nichtlösungsmittel bei einer Temperatur von etwa 15°C bis etwa 25°C in Dunkelheit; und
(e) Trocknen der Schicht.

Zudem betrifft die Erfindung die Verwendung einer Schicht gemäß der Erfindung oder eines mehrschichtigen Systems gemäß der Erfindung zum Nachweis von molekularem Sauerstoff.

### Kurzbeschreibung der Figuren

Figur 1 zeigt die Messung von molekularem Sauerstoff unter Verwendung der erfindungsgemäßen Schicht.
Figur 2 zeigt die Messung der Intensität bei verschiedenen Sauerstoffkonzentrationen unter Verwendung der erfindungsgemäßen Schicht und des erfindungsgemäßen mehrschichtigen Systems.
Figur 3 zeigt die Messung von molekularem Sauerstoff unter Verwendung des erfindungsgemäßen mehrschichtigen Systems.

### Detaillierte Beschreibung der Erfindung

In einem ersten Aspekt betrifft die Erfindung eine sauerstoffdurchlässige Schicht zum Nachweis von molekularem Sauerstoff, wobei die Schicht ein Trägermaterial aufweist, wobei das Trägermaterial Polyvinylidenfluorid oder ein Copolymer von Polyvinylidenfluorid ist,
dadurch gekennzeichnet, dass
in dem Trägermaterial mindestens ein Partikel umfasst ist, der ein Polymer oder ein Copolymer umfasst, wobei das Polymer oder Copolymer des Partikels eine chemisch kovalent gebundene Indikatorverbindung zum Nachweis von molekularem Sauerstoff aufweist, und wobei der Partikel mechanisch in dem Trägermaterial immobilisiert ist.

Die erfindungsgemäße Schicht ist für Sauerstoff durchlässig und somit zum Nachweis von molekularem Sauerstoff geeignet. Das Trägermaterial ist Polyvinylidenfluorid oder ein Copolymer von Polyvinylidenfluorid. Polyvinylidenfluorid, auch Polyvinylidendifluorid (PVdF) genannt, weist eine hohe chemische Beständigkeit gegenüber einer Vielzahl von Lösungsmitteln auf. Der Begriff "chemische Beständigkeit" wie hier verwendet bezeichnet die Widerstandsfähigkeit von Verbindungen, Polymeren, Copolymeren, Partikeln und anderen Materialien gegen die EinWirkung von Chemikalien. Durch die Verwendung von Polyvinylidenfluorid oder einem Copolymer von Polyvinylidenfluorid als Trägermaterial weist die Schicht eine hohe chemische Beständigkeit gegenüber einer Vielzahl von Lösungsmitteln auf.

Der Begriff "Copolymer" wie hier verwendet bezeichnet ein Polymer, das aus zwei oder mehr unterschiedlichen Monomeren zusammengesetzt ist.

In einer bevorzugten Ausführungsform ist das Copolymer von Polyvinylidenfluorid Poly(vinylidenfluorid-co-hexafluoropropylen).

In dem Trägermaterial ist mindestens ein Partikel umfasst. Der Partikel ist mechanisch in dem Trägermaterial immobilisiert.

Der Partikel umfasst ein Polymer oder ein Copolymer, wobei das Polymer oder Copolymer des Partikels eine chemisch kovalent gebundene Indikatorverbindung zum Nachweis von molekularem Sauerstoff aufweist. Der Begriff "Indikatorverbindung" wie hier verwendet bezeichnet eine Verbindung, die als Reaktion auf die Anwesenheit von molekularem Sauerstoff eine nachweisbare Veränderung in einer optischen Eigenschaft zeigt. Beispiele für bekannte Indikatorverbindungen zum Nachweis von molekularem Sauerstoff sind Ruthenium-Komplexe sowie unmetallierte und metallierte Porphyrine wie beispielsweise Platin(II)-meso-Tetrakispentafluorphenyl-tetrabenzoporphyrin und Palladium(II)-meso-Tetrakispentafluorphenyl-tetrabenzoporphyrin.

In einer bevorzugten Ausführungsform ist das Copolymer des Partikels ein Terpolymer, das heißt ein Copolymer, das aus drei unterschiedlichen Monomeren bzw. Monomereinheiten zusammengesetzt ist.

In einer bevorzugten Ausführungsform besteht der Partikel im Wesentlichen oder vollständig aus dem Polymer oder Copolymer.

Physisch an Schichten adsorbierte oder in das Trägermaterial von Schichten eingebettete Indikatorverbindungen können sich insbesondere bei Applikationen in organischen Lösungsmitteln bei Temperaturen über 100°C aus dem polymeren Schichtmaterial herauslösen. Dadurch wird die Qualität der Sauerstoffmessung mit zunehmender Betriebsdauer beeinträchtigt und die Gesamtbetriebsdauer der Schicht erheblich verkürzt. Außerdem muss das Messsystem nach chemischen und thermischen Belastungen rekalibriert werden. Gerade bei der Überwachung von explosiven organischen Lösungsmittel-Sauerstoff-Gemischen in der chemischen Industrie oder bei der Pasteurisierung von öligen Naturstoffen oder Lebensmitteln ist eine regelmäßige und dauerhafte chemische und thermische Belastbarkeit der Schicht jedoch von zentraler Bedeutung.

Durch die kovalente Anbindung der Indikatorverbindung im Polymer oder Copolymer wird ein Herauslösen der Verbindung aus der Schicht verhindert. Unter anderen ist die Mobilität der Indikatorverbindung durch die kovalente Anbindung am Partikel unterbunden und der Abtransport der Verbindung aus der Schicht deutlich erschwert. Daher ist es bei Verwendung der erfindungsgemäßen Schicht im Gegensatz zu bisher verwendeten Schichten nicht notwendig, nach einem chemischen Belastung bei hohen Temperaturen eine Rekalibrierung des Messsystems durchzuführen.

Die hohe chemische und thermische Stabilität der Schicht ermöglicht deren Einsatz zur Messung von Sauerstoff in organischen Lösungsmitteln wie beispielsweise n-Heptan, Ethanol, Acetonitril, Dichloromethan und Aceton, selbst bei Temperaturen von über 100°C.

Durch die Stabilität der Schichten wird eine gleichbleibende Qualität der Sauerstoffmessung gesichert und die Betriebsdauer der Schichten verlängert. Durch den Einsatz der Schichten können daher langzeitstabile Sauerstoffmesssysteme mit vielfältigen Einsatzmöglichkeiten bereitgestellt werden.

Die kovalente Anbindung der Indikatorverbindung im Polymer oder Copolymer ermöglicht es zudem, die Schicht durch ein Phaseninversionsverfahren herzustellen. Dabei wird das Trägermaterial zunächst in einem Lösungsmittel wie beispielsweise N-Methylpyrrolidon gelöst und mit dem mindestens einen Partikel in Kontakt gebracht. Lösungsmittel wie N-Methylpyrrolidon können nichtkovalent gebundene Indikatorverbindungen aus dem Polymer oder Copolymer des Partikels herauslösen. Dadurch können sich die optochemischen Eigenschaften der Indikatorverbindung ungünstig verändern. Indem das Polymer oder Copolymer des Partikels eine chemisch kovalent gebundene Indikatorverbindung aufweist, wird ein Herauslösen der Indikatorverbindung verhindert. Dadurch ist es möglich, die erfindungsgemäße Schicht mittels Phaseninversionsverfahren prozesssicher zu erzeugen.

Das Phaseninversionsverfahren weist im Vergleich zu Sol-Gel-Verfahren, die zur Herstellung bekannter sensorischer Schichten eingesetzt werden, eine bessere Reproduzierbarkeit auf. Außerdem sind mittels Sol-Gel-Verfahren hergestellte Schichten mechanisch labil, so dass bereits leichte Oberflächenbeschädigungen die Schicht zerstören können. Die erfindungsgemäße Schicht hat dagegen eine gute mechanische Stabilität, sodass die Schicht in einer Vielzahl von Anwendungsbereichen eingesetzt werden kann.

Zusammengefasst weist die erfindungsgemäße Schicht eine erhöhte mechanische, chemische und thermische Stabilität im Vergleich zu bekannten Schichten auf.

In einer bevorzugten Ausführungsform ist die Schicht mittels Phaseninversionsverfahren hergestellt. Neben der guten Reproduzierbarkeit liegt ein weiterer Vorteil des Phaseninversionsverfahrens darin, dass Polyvinylidenfluorid und Copolymere von Polyvinylidenfluorid eine poröse Struktur aufweisen, wenn sie mittels Phaseninversionsverfahren hergestellt wurden. Eine mittels Phaseninversionsverfahren hergestellte erfindungsgemäße Schicht hat daher Poren. Der Begriff "Pore" wie hier verwendet bezeichnet einen Hohlraum in der Schicht, der eine Größe bzw. einen Durchmesser von mindestens 50 nm hat. Durch die Poren erhöht sich die Sauerstoffdurchlässigkeit der Schicht. Dies führt zu einer Verkürzung der Ansprechzeit der Schicht.

Die Erfinder haben festgestellt, dass eine mittels Phaseninversionsverfahren hergestellte erfindungsgemäße Schicht eine sehr kurze Ansprechzeit hat. Der Begriff "Ansprechzeit" wie hier verwendet bezeichnet die Ansprechzeit t₉₀, die die Zeitdauer des Signalanstiegs von 0% bis 90% der endgültigen Signalintensität beziehungsweise die Zeitdauer des Signalabfalls von 100% bis 10% beschreibt. Die Erfinder haben festgestellt, dass die Ansprechzeit der mittels Phaseninversionsverfahren hergestellten Schicht zwischen den Sauerstoffpartialdrücken 33 und 200 mbar zwischen 42 und 84 ms liegt. Somit ist die Ansprechzeit der Schicht kürzer als 100 ms. Damit ist die Schicht insbesondere für Anwendungen, bei denen die Menge von molekularem Sauerstoff in einem Gas oder einer Flüssigkeit in Echtzeit überwacht werden muss, geeignet. Die Schicht kann beispielsweise zur Überwachung von explosiven Gemischen eingesetzt werden.

Die kurze Ansprechzeit der Schicht ist insbesondere für die Bestimmung der Menge von molekularem Sauerstoff in einem Gas von Vorteil.

Je größer der Durchmesser der Poren der Schicht ist, desto höher ist die Sauerstoffdurchlässigkeit der Schicht. Die maximale Größe der Poren hängt dabei von der Größe der Partikel ab, die mechanisch in dem Trägermaterial gehalten werden.

In einer bevorzugten Ausführungsform hat die Schicht Poren mit einem Durchmesser von etwa 0,05 µm bis etwa 2 µm, vorzugsweise von etwa 0,1 µm bis etwa 1 µm, weiter bevorzugt von etwa 0,2 µm bis etwa 0,5 µm, weiter bevorzugt von etwa 0,45 µm bis etwa 0,5 µm, weiter bevorzugt von etwa 0,45 µm. Bei dieser Porengröße weist die Schicht eine sehr gute Sauerstoffdurchlässigkeit auf und die Partikel bleiben besonders gut in dem Trägermaterial gefangen.

Es ist die Möglichkeit bekannt, eine Indikatorverbindung durch Ankopplung an entsprechend funktionalisierte Polymere im Trägermaterial einer sensorischen Schicht chemisch direkt an das Trägermaterial zu binden. Dies setzt jedoch eine chemische Modifizierung der Indikatorverbindung voraus, durch die die Photostabilität der Verbindung ungünstig verändert werden kann. In der erfindungsgemäßen Schicht ist die Indikatorverbindung nicht direkt an das Trägermaterial der Schicht gebunden. Vielmehr liegt die Indikatorverbindung in der erfindungsgemäßen Schicht nur im Polymer oder Copolymer des Partikels vor. Dadurch bleibt die Photostabilität der Verbindung bei der Herstellung der sensorischen Schicht erhalten. Die Photostabilität der Verbindung ist vor allem für Anwendungen mit hohen Lichtintensitäten und für Langzeitmessungen von Bedeutung. Zudem müssen die für eine Ankopplung funktionalisierten Polymere einer Schicht eine gewisse Lösungsmittel-Quellfähigkeit aufweisen, damit die Indikatorverbindung zum Kopplungsort gelangen kann. Werden die funktionalisierten Polymere bei der Herstellung der Schicht zu stark vernetzt, verlieren sie ihre Quellfähigkeit, so dass der Vernetzungsgrad des polymeren Schichtmaterials im Falle des direkten Ankoppelns der Indikatorverbindung begrenzt ist. Im Gegensatz dazu ermöglicht der Einsatz eines Partikels, der ein Polymer oder ein Copolymer mit der Indikatorverbindung umfasst, den Vernetzungsgrad des Trägermaterials der Schicht je nach Einsatzgebiet beliebig zu gestalten.

Für die Quantifizierung von molekularem Sauerstoff kann die Schicht auf ein transparentes Substrat, beispielsweise eine transparente Folie, fixiert werden. Hinter dem transparenten Substrat kann ein optisches System positioniert sein, das beispielsweise eine Anregungslichtquelle, einen Photodetektor, entsprechende optische Filter und eine Auswerteelektronik aufweist. Das Anregungs- und Emissionslicht kann auch über Lichtleiter übertragen werden. Die Anregungslichtquelle kann beispielsweise eine Licht emittierende Diode (LED) sein. Der Photodetektor besteht üblicherweise aus Photodioden.

In einer bevorzugten Ausführungsform hat die Schicht eine Dicke von etwa 10 µm bis etwa 300 µm, vorzugsweise von etwa 50 µm bis etwa 250 µm, weiter bevorzugt von etwa 80 µm bis etwa 200 µm.

In einer bevorzugten Ausführungsform umfasst der Partikel ein Copolymer, das aus einer Indikatorverbindung als erstem Monomer und mindestens einem zweiten Monomer zusammengesetzt ist, wobei das zweite Monomer aus der Gruppe bestehend aus Styrol, einem einfach substituierten Styrol, einem mehrfach substituierten Styrol, einem Divinylbenzol, einem Alkylacrylat, einem Alkylmethacrylat, Bismethacrylat, Acrylamid, Bisacrylamid, einem Vinylsulfonamid, einem O-Vinylether und Gemischen davon ausgewählt ist.

Das einfach substituierte Styrol kann beispielsweise ortho-Vinyltoluol, meta-Vinyltoluol, para-Vinyltoluol, 2-Methylstyrol, 3-Methylstyrol, 4-Methylstyrol, alpha-Methylstyrol (2-Phenylpropen), beta-Methylstyrol (1-Propenylbenzol), 2-Ethylstyrol, 3-Ethylstyrol, 4-Ethylstyrol, meta-Isopropylstyrol, para-Isopropylstyrol, meta-Isobutylstyrol, para-Aminostyrol oder para-Acetylstyrol sein.

Das mehrfach substituierte Styrol kann beispielsweise 2,4-Dimethylstyrol, 2,5-Dimethylstyrol, 3,4-Dimethylstyrol, 3,5-Dimethylstyrol, 2,4,5-Trimethylstyrol oder 2,4,6-Trimethylstyrol sein.

Das Divinylbenzol kann ortho-Divinylbenzol, meta-Divinylbenzol, para-Divinylbenzol oder ein Gemisch aus ortho-, meta- und para-Divinylbenzol sein. Das Divinylbenzol ist vorzugsweise meta-Divinylbenzol, para-Divinylbenzol oder ein Gemisch aus meta- und para-Divinylbenzol.

Das Alkylacrylat kann beispielsweise Methylacrylat, Ethylacrylat, Isopropylacrylat, n-Butylacrylat Isobutylacrylat, Bis-(dimethylamino)-isopropylacrylat oder 1,1,1,3,3,3-Hexafluoroisopropylacrylat sein.

Das Alkylmethacrylat kann beispielsweise Methylmethacrylat, Ethylmethacrylat, 2-Hydroxyethylmethacrylat, Isopropylmethacrylat, n-Butylmethacrylat, Isobutylmethacrylat, Bis-(dimethylamino)-isopropylmethacrylat oder 1,1,1,3,3,3-Hexafluoroisopropylmethacrylat sein.

Bisacrylamid wird auch N,N'-Methylenbisacrylamid genannt.

Der O-Vinylether kann beispielsweise Methylvinylether, Ethylvinylether, Allylvinylether, Isopropylvinylether, Butylvinylether, Isobutylvinylether, tert-Butylvinylether, Hydroxybutylvinylether, Phenylvinylether, Benzylvinylether, Cyclohexylvinylether oder Butandioldivinylether sein.

In einer bevorzugten Ausführungsform ist das zweite Monomer ein Gemisch aus Styrol und einem Divinylbenzol.

Durch die unterschiedlichen chemischen Eigenschaften der für das zweite Monomer zur Auswahl stehenden Einheiten lassen sich die Eigenschaften des Copolymers wie beispielsweise der Vernetzungsgrad des Copolymers steuern.

In einer besonders bevorzugten Ausführungsform ist das Copolymer des Partikels ein Terpolymer, das aus einer Indikatorverbindung als erstem Monomer, einem zweiten Monomer und einem dritten Monomer zusammengesetzt ist. Vorzugsweise ist das zweite Monomer aus der Gruppe bestehend aus Styrol, einem einfach substituierten Styrol, einem mehrfach substituierten Styrol, einem Alkylacrylat, einem Alkylmethacrylat, Acrylamid, einem Vinylsulfonamid und einem O-Vinylether ausgewählt und das dritte Monomer aus der Gruppe bestehend aus einem Divinylbenzol, Bismethacrylat und Bisacrylamid ausgewählt. In diesem Fall dient das dritte Monomer als Vernetzer.

In einer bevorzugten Ausführungsform ist die Indikatorverbindung eine Verbindung der Formel (I): 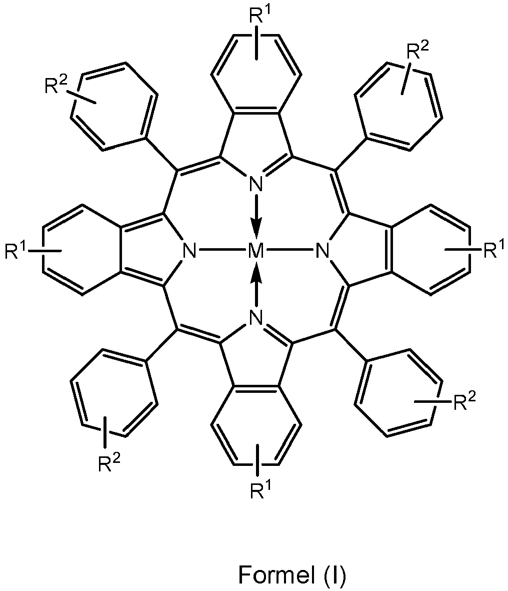 wobei
M Pd²⁺ oder Pt²⁺ ist,
R¹ jeweils CF₃ oder H ist,
R² jeweils -(CH₂)ₙ-R³ oder H ist, wobei mindestens ein R² -(CH₂)ₙ-R³ ist,
R³ jeweils ortho-Styryl, meta-Styryl, para-Styryl, Vinyl, Acrylamid, Methacrylamid, Acrylat, Methacrylat, Vinylsulfonat oder Vinylsulfonamid ist, und
n eine ganze Zahl von 0 bis 12 ist, wenn R³ Vinyl, Acrylamid, Methacrylamid, Acrylat, Methacrylat, Vinylsulfonat oder Vinylsulfonamid ist, und
n eine ganze Zahl von 1 bis 12 ist, wenn R³ ortho-Styryl, meta-Styryl oder para-Styryl ist.

Die Verbindung der Formel (I) kann beispielsweise Platin(II)-5,10,15,20-tetra(p-(3-(4-vinylphenyl)propyl)phenyl)-tetrabenzoporphyrin, Platin(II)-5,1 0, 15,20-tetra(p-(5-methacrylamidopentyl)phenyl)-tetrabenzoporphyrin, Palladium(II)-5,1 0, 15,20-tetra(p-(5-methacrylamidopentyl)phenyl)-tetrabenzoporphyrin, Platin(ll)-5,10,15,20-tetra(p-(6-acryloyloxyhexyl)phenyl)-tetrabenzoporphyrin, oder Platin(II)-5,1 0, 15,20-tetra(p-vinylphenyl)-tetrabenzoporphyrin sein.

Die Verbindung der Formel (I) kann beispielsweise ein Regioisomerengemisch aus Platin(II)-5,10,15,20-tetra(p-(4-acryloyloxybutyl)phenyl)-2²,7²,12²,17²-tetra(trifluormethyl)-tetrabenzoporphyrin, Platin (II)-5,10,15,20-tetra(p-(4-acryloyloxybutyl)phenyl)-2²,7³,12²,17³-tetra(trifluormethyl)-tetrabenzoporphyrin, Platin(II)-5,10,15,20-tetra(p-(4-acryloyloxybutyl)phenyl)-2²,7²,12³,17³-tetra(trifluormethyl)-tetrabenzoporphyrin, und Platin(II)-5,10,15,20-tetra(p-(4-acryloyloxybutyl)phenyl)-2²,7²,12²,17³-tetra(trifluormethyl)-tetrabenzoporphyrin sein.

Die Verbindung der Formel (I) kann beispielsweise ein Regioisomerengemisch aus Palladium(II)-5,10,15,20-tetra(p-(3-acrylamidopropyl)phenyl)-2²,7²,12²,17²-tetra(trifluormethyl)-tetrabenzoporphyrin, Palladium(II)-5,10,15,20-tetra(p-(3-acrylamidopropyl)phenyl)-2²,7³,12²,17³-tetra(trifluormethyl)-tetrabenzoporphyrin, Palladium(II)-5,10,15,20-tetra(p-(3-acrylamidopropyl)phenyl)-2²,7²,12³,17³-tetra(trifluormethyl)-tetrabenzoporphyrin, und Palladium(II)-5,10,15,20-tetra(p-(3-acrylamidopropyl)phenyl)-2²,7²,12²,17³-tetra(trifluormethyl)-tetrabenzoporphyrin sein.

Ein Copolymer, in dem eine Verbindung der Formel (I) chemisch kovalent gebunden ist, ist beispielsweise Poly(Platin(ll)-5,10,15,20-tetra(p-vinylphenyl)-tetrabenzoporphyrin-co-divinylbenzol).

Ein Terpolymer, in dem eine Verbindung der Formel (I) chemisch kovalent gebunden ist, ist beispielsweise Poly(Platin(II)-5,10,15,20-tetra(p-vinylphenyl)-tetrabenzoporphyrin-co-styrol-co-divinylbenzol) oder Poly(Platin(II)-5,10,15,20-tetra(p-(6-acryloyloxyhexyl)phenyl)-tetrabenzoporphyrin-co-styrol-co-divinylbenzol.

In einer bevorzugten Ausführungsform ist die Indikatorverbindung eine Verbindung der Formel (II): 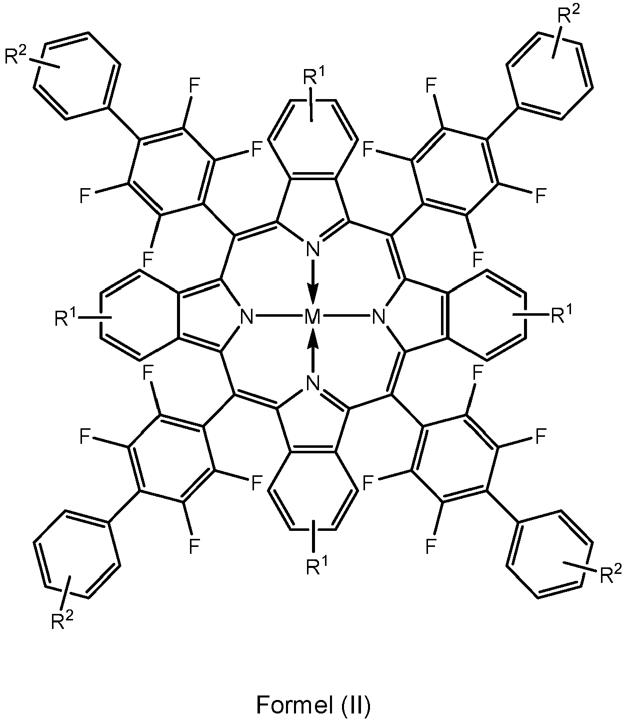 wobei
M Pd²⁺ oder Pt²⁺ ist,
R¹ jeweils CF₃ oder H ist,
R² jeweils -(CH₂)ₙ-R³ oder H ist, wobei mindestens ein R² -(CH₂)ₙ-R³ ist,
R³ jeweils ortho-Styryl, meta-Styryl, para-Styryl, Vinyl, Acrylamid, Methacrylamid, Acrylat, Methacrylat, Vinylsulfonat oder Vinylsulfonamid ist, und n eine ganze Zahl von 1 bis 12 ist.

Die Verbindung der Formel (II) kann beispielsweise Platin(II)-5,10, 15,20-tetra(4'-(3-acrylamidopropyl)-2,3,5,6-tetrafluor-[1,1'-biphenyl]-4-yl)-tetrabenzoporphyrin, Palladium(11)-5,10,15,20-tetra(2,3,5,6-tetrafluor-4'-(methacryloyloxy)-[1,1'-biphenyl]-4-yl)-tetrabenzoporphyrin, Platin(II)-5,10,15,20-tetra(2,3,5,6-tetrafluor-4'-vinyl-[1,1'-biphenyl]-4-yl)-tetrabenzoporphyrin, oder Platin(ll)-5,10,15,20-tetra(2,3,5,6-tetrafluor-4'-(undec-10-en-1 -yl)-[1,1 '-biphenyl]-4-yl)-tetrabenzoporphyrin sein.

Die Verbindung der Formel (II) kann beispielsweise ein Regioisomerengemisch aus Platin(II)-5,10,15,20-tetra(2,3,5,6-tetrafluor-4'-vinyl-[1,1'-biphenyl]-4-yl)-2²,7², 12², 17²⁻tetra(trifluormethyl)-tetrabenzoporphyrin, Platin(II)-5,10,15,20-tetra(2,3,5,6-tetrafluor-4'-vinyl-[1,1'-biphenyl]-4-yl)-2^{2,}7²,12³,17³-tetra(trifluormethyl)-tetrabenzoporphyrin, Platin(II)-5,10,15,20-tetra(2,3,5,6-tetrafluor-4'-vinyl-[1,1'-biphenyl]-4-yl)-2²,7³,12²,17³-tetra(trifluormethyl)-tetrabenzoporphyrin, und Platin(II)-5,10,15,20-tetra(2,3,5,6-tetrafluor-4'-vinyl-[1,1'-biphenyl]-4-yl)-2²,7²,12²,17³-tetra(trifluormethyl)-tetrabenzoporphyrin sein.

Ein Copolymer, in dem eine Verbindung der Formel (II) chemisch kovalent gebunden ist, ist beispielsweise Poly(Platin(ll)-5,10,15,20-tetra(4'-(3-acrylamidopropyl)-2,3,5,6-tetrafluor-[1,1'-biphenyl]-4-yl)-tetrabenzoporphyrin-co-divinylbenzol).

Ein Terpolymer, in dem eine Verbindung der Formel (II) chemisch kovalent gebunden ist, ist beispielsweise Poly(Platin(ll)-5,10,15,20-tetra(4'-(3-acrylamidopropyl)-2,3,5,6-tetrafluor-[1,1'-biphenyl]-4-yl)-tetrabenzoporphyrin-co-styrol-co-divinylbenzol) oder Poly(Palladium(ll)-5,10,15,20-tetra(2,3,5,6-tetrafluor-4'-(methacryloyloxy)-[1,1'-biphenyl]-4-yl)-tetrabenzoporphyrin-co-styrol-co-divinylbenzol).

Die Verbindungen der Formeln (I) und (II) sind als Indikatorverbindungen für die erfindungsgemäße Schicht besonders geeignet. R³ ist eine polymerisierbare Einheit, die eine Polymerisation, insbesondere eine radikalische Polymerisation, der Verbindungen ermöglicht. Dadurch können die Verbindungen kovalent in einem Copolymer gebunden werden. Die Polymerisationreaktion kann eine radikalische Polymerisation, eine anionische Polymerisation oder eine kationische Polymerisation sein.

Die Verbindungen der Formeln (I) und (II) lumineszieren im nahen Infrarot-Bereich und weisen eine hohe Photostabilität und eine sehr gute Quantenausbeute auf. Der Begriff "Photostabilität" wie hier verwendet bezeichnet die Stabilität einer Verbindung bei Einwirkung von Licht. Dabei bedeutet eine hohe Photostabilität, dass eine Einwirkung von Licht nicht oder nur in geringem Maße zu einem Abbau und/oder einer Photobleichung der Verbindung führt. Eine Photobleichung oder Ausbleichung der Verbindung bedeutet eine Abnahme in der Intensität der Lumineszenz der Verbindung, die durch eine Zerstörung der Verbindung aufgrund der Lichteinwirkung hervorgerufen wird.

Die Verbindungen der Formeln (I) und (II) weisen im Vergleich zu strukturell verwandten bekannten Indikatorverbindungen wie Platin(II)-meso-Tetrakispentafluorphenyl-tetrabenzoporphyrin und Palladium (II)-meso-Tetrakispentafluorphenyl-tetrabenzoporphyrin eine höhere chemische Beständigkeit gegenüber oxidierenden Substanzen auf. Beispiele für oxidierende Substanzen sind Lösungen von Natriumhypochlorit und/oder Kaliumhypochlorit, Peressigsäure, Perameisensäure, Perpropionsäure, Wasserstoffperoxid oder gelöstes Chlordioxid. Somit weist die Schicht bei Verwendung einer Verbindung der Formel (I) oder (II) zusätzlich auch eine hohe chemische Beständigkeit gegenüber oxidierenden Substanzen auf.

In einer bevorzugten Ausführungsform haben die Partikel eine mittlere Partikelgröße von etwa 0,1 µm bis etwa 50 µm, vorzugsweise von etwa 2 µm bis etwa 30 µm, weiter bevorzugt von etwa 5 µm bis etwa 10 µm.

In einer bevorzugten Ausführungsform ist eine Vielzahl von Partikeln in dem Trägermaterial umfasst und die Partikel sind vorzugsweise homogen in dem Trägermaterial verteilt. Durch die homogene Verteilung der Partikel gibt es keine Agglomeration der Partikel in dem Trägermaterial. Eine Agglomeration der Partikel kann zu einer Verlängerung der Ansprechzeit der Schicht führen.

Um eine bessere Signalqualität zu erreichen, kann die erfindungsgemäße Schicht mit einer oder mehreren weiteren sauerstoffdurchlässigen Schichten, die keine Indikatorverbindung aufweisen, versehen werden.

In einem zweiten Aspekt betrifft die Erfindung ein mehrschichtiges System zum Nachweis von molekularem Sauerstoff, das mindestens eine erste sauerstoffdurchlässige Schicht und eine zweite sauerstoffdurchlässige Schicht umfasst, wobei die erste Schicht eine Schicht gemäß der Erfindung ist und die zweite Schicht keine Indikatorverbindung zum Nachweis von molekularem Sauerstoff aufweist.

Die Erfinder haben festgestellt, dass auch das erfindungsgemäße mehrschichtige System eine sehr kurze Ansprechzeit von weniger als 100 ms aufweist. Dadurch kann das mehrschichtige System zur Überwachung eines Sauerstoffgehalts in Echtzeit eingesetzt werden.

Die zweite Schicht ist vorzugsweise auf die erste Schicht aufgebracht. Eine auf die erste Schicht aufgebrachte zweite Schicht kann beispielsweise als Schutzschicht dienen, um einen direkten Kontakt der ersten Schicht mit dem zu untersuchenden Medium zu vermeiden. Dadurch wird die erste Schicht vor mechanischen Schäden geschützt. Indem die zweite Schicht keine Indikatorverbindung zum Nachweis von molekularem Sauerstoff aufweist, werden zudem chemische Reaktionen der Indikatorverbindung mit Komponenten des zu untersuchenden Mediums verhindert.

Die zweite Schicht kann beispielsweise aus Polyvinylidenfluorid, Polytetrafluorethylen, Zelluloseacetat oder Zellulosenitrat bestehen.

In einer bevorzugten Ausführungsform besteht die zweite Schicht aus Polyvinylidenfluorid, vorzugsweise aus porösem Polyvinylidenfluorid. Poröses Polyvinylidenfluorid weist eine gute Sauerstoffdurchlässigkeit sowie eine hohe chemische Beständigkeit gegenüber einer Vielzahl von Lösungsmitteln auf.

In einer bevorzugten Ausführungsform ist die zweite Schicht weiß gefärbt. Dadurch wird die Lichtausbeute des mehrschichtigen Systems verbessert.

In einer bevorzugten Ausführungsform hat die zweite Schicht eine Dicke von etwa 10 µm bis etwa 300 µm, vorzugsweise von etwa 10 µm bis etwa 200 µm, weiter bevorzugt von etwa 45 µm bis etwa 130 µm.

In einer bevorzugten Ausführungsform umfasst das mehrschichtige System weiter eine dritte sauerstoffdurchlässige Schicht, die keine Indikatorverbindung zum Nachweis von molekularem Sauerstoff aufweist. Die dritte Schicht ist vorzugsweise auf die zweite Schicht aufgebracht. Die dritte Schicht kommt vorzugsweise bei der Verwendung des mehrschichtigen Systems mit dem zu untersuchenden Medium in Kontakt und ist schwarz gefärbt. Dadurch wird ein Eindringen von Fremdlicht verhindert.

In einem dritten Aspekt betrifft die Erfindung ein Verfahren zur Herstellung der Schicht gemäß der Erfindung, das Verfahren umfassend die Schritte
(a) Bereitstellen eines Gemischs, das ein Trägermaterial und mindestens einen Partikel aufweist, wobei das Trägermaterial Polyvinylidenfluorid oder ein Copolymer von Polyvinylidenfluorid ist und der Partikel ein Polymer oder ein Copolymer umfasst, wobei das Polymer oder Copolymer des Partikels eine chemisch kovalent gebundene Indikatorverbindung zum Nachweis von molekularem Sauerstoff aufweist, in einem Lösungsmittel, wobei das Lösungsmittel so ausgewählt ist, dass sich das Trägermaterial im Wesentlichen darin löst, während sich die Partikel im Wesentlichen nicht darin lösen;
(b) Homogenisieren des Gemischs bei einer Temperatur von etwa 15°C bis etwa 25°C unter Rühren;
(c) Rakeln des Gemischs auf eine Trägerfolie;
(d) Präzipitieren der Schicht durch Eintauchen der Trägerfolie mit dem Rakelat aus Schritt (c) in ein Nichtlösungsmittel bei einer Temperatur von etwa 15°C bis etwa 25°C in Dunkelheit; und
(e) Trocknen der Schicht.

Das erfindungsgemäße Verfahren ist ein Phaseninversionsverfahren. Für das Phaseninversionsverfahren muss das Lösungsmittel so ausgewählt sein, dass sich das Trägermaterial im Wesentlichen darin löst, während sich die Partikel im Wesentlichen nicht darin lösen. Dementsprechend ist das Nichtlösungsmittel so ausgewählt, dass sich das Trägermaterial im Wesentlichen nicht darin löst.

Das Phaseninversionsverfahren weist im Vergleich zum Sol-Gel-Verfahren, mit dem bekannte sensorische Schichten hergestellt werden, eine bessere Reproduzierbarkeit auf. Zudem sind mittels Sol-Gel-Verfahren hergestellte Schichten mechanisch labil, so dass die Schicht leicht beschädigt werden kann. Die erfindungsgemäße Schicht hat dagegen eine gute mechanische Stabilität, sodass die Schicht in einer Vielzahl von Anwendungsbereichen eingesetzt werden kann.

Die Partikel werden zunächst möglichst homogen in dem Trägermaterial verteilt. Dazu wird das Gemisch bei einer Temperatur von etwa 15°C bis etwa 25°C, beispielsweise bei 20°C unter Rühren inkubiert. Der Homogenisierungsschritt kann für mehrere Stunden, beispielsweise 4 Stunden ausgeführt werden.

Das Rakeln des Gemischs auf die Trägerfolie kann beispielsweise mit einem Metall-Rakel ausgeführt werden. Das Rakeln wird vorzugsweise bei einer Temperatur von etwa 15°C bis etwa 25°C, beispielsweise bei 20°C durchgeführt.

Die Trägerfolie kann beispielsweise eine Polypropylenfolie oder eine Polyvinylidenfluoridfolie sein.

Durch Eintauchen der Trägerfolie mit dem Rakelat aus Schritt (c) in ein Nichtlösungsmittel geht das Lösungsmittel in Lösung über und das Rakelat fällt unter Bildung von Poren als Schicht aus.

Das Trocknen der Schicht kann beispielsweise bei einer Temperatur von 90°C erfolgen. Vorzugsweise erfolgt das Trocknen in einem Trockenschrank oder einem Ofen. Der Trocknungsschritt kann für mehrere Stunden, beispielsweise 16 Stunden ausgeführt werden.

Nach dem Trocknen kann die Schicht von der Trägerfolie abgelöst werden oder gemeinsam mit der Trägerfolie als mehrschichtiges System Verwendung finden.

In einer bevorzugten Ausführungsform ist das Lösungsmittel N-Methylpyrrolidon, Dimethylacetamid, Dimethylformamid, Hexamethylphosphortriamid, Trimethylphosphat, Triethylphosphat oder Dimethylsulfoxid, vorzugsweise Dimethylacetamid.

In einer bevorzugten Ausführungsform ist das Nichtlösungsmittel deionisiertes Wasser, Methanol, Ethanol, Butanol oder ein Gemisch davon, vorzugsweise deionisiertes Wasser.

In einem weiteren Aspekt betrifft die Erfindung die Verwendung einer Schicht gemäß der Erfindung oder eines mehrschichtigen Systems gemäß der Erfindung zum Nachweis von molekularem Sauerstoff, vorzugsweise zum quantitativen Nachweis von molekularem Sauerstoff.

Der molekulare Sauerstoff kann in festen, gasförmigen oder flüssigen Medien bestimmt werden. In einer bevorzugten Ausführungsform werden die Schicht oder das mehrschichtige System zum Messen von Sauerstoff in Dämpfen von organischen Lösungsmitteln verwendet. In einer anderen Ausführungsform wird gelöster molekularer Sauerstoff in einem flüssigen Medium, vorzugsweise in einem organischen Lösungsmittel gemessen.

### Beispiele

### Beispiel 1:

### Herstellung von Schichten und zweischichtigen Systemen zur Messung von molekularem Sauerstoff mittels Phaseninversionsverfahren

### Ansatz

| **Reagenz** | **Menge** |
|---|---|
| A) Partikel | 430 mg |
| B) Polyvinylidenfluorid | 1,00 g |
| C) N-Methylpyrrolidon | 15 ml |

1,00 g Pellets von Polyvinylidenfluorid (PVdF) werden in 15 ml N-Methylpyrrolidon gelöst. Nach vollständiger Auflösung werden 430 mg Partikel aus Poly(Platin(II)-5,10,15,20-tetra(p-(6-acryloxyhexyl)phenyl)-tetrabenzoporphyrin-co-styrol-co-divinylbenzol) zugegeben und für mindestens weitere 4 Stunden gerührt. Die homogene Masse wird dann mit einem Laborrakel (200 Mikrometer-Einstellung) auf eine Polypropylenträgerfolie gerakelt, um eine Schicht bzw. eine einschichtige Membran herzustellen, oder auf eine poröse PVdF-Folie gerakelt, um ein zweischichtiges System bzw. eine zweischichtige Membran herzustellen. Unmittelbar danach wird die Folie samt Rakelat in einen Wassertrog, der mit deionisiertem Wasser gefüllt ist, eingetaucht und mindestens 12 Stunden in Dunkelheit zur Präzipitation stehen gelassen. Die Membranen werden anschließend bei 90°C für 16 Stunden im Ofen getrocknet.

### Beispiel 2:

### Verwendung der Schicht zur Messung von molekularem Sauerstoff

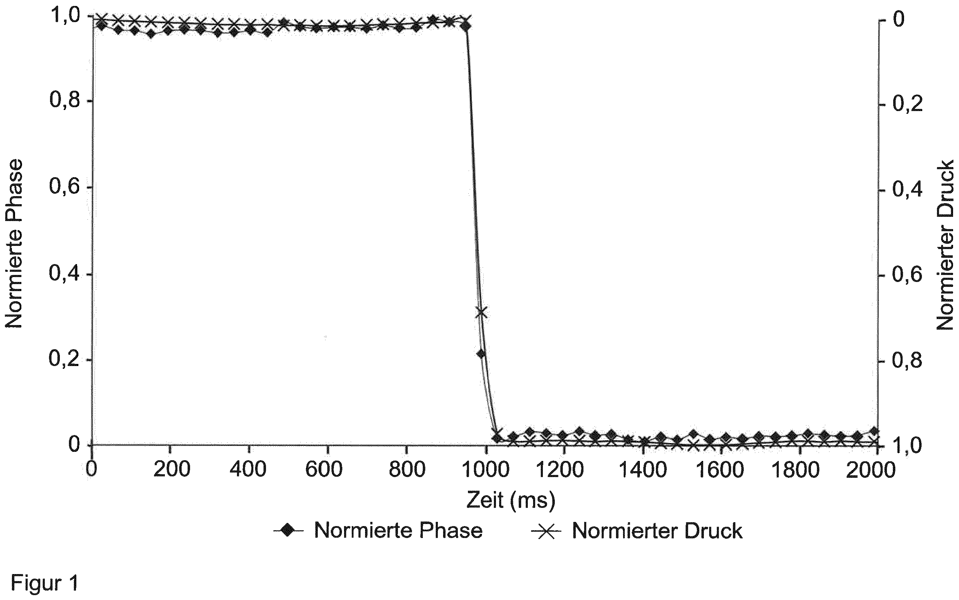

Um die Ansprechzeit der Schicht aus Beispiel 1 zu prüfen, wird eine sehr schnelle Druckänderung zwischen einem Unterdruck von 160 mbar (normiert auf 0,00) und atmosphärischem Luftdruck von 960 mbar (normiert auf 1,00) durchgeführt. Die Druckänderung wird während der Messung mittels eines schnellen Drucksensors (PAA-M5 HB, Keller AG, Winterthur, Schweiz) mitgemessen. Die Messwerte werden für beide Sensoren (Drucksensor und Sauerstoffsensor) alle 42 Millisekunden aufgenommen. Um die Ergebnisse besser zu visualisieren, werden die experimentell erhaltenen Daten der Phase ebenfalls normiert und in eine Grafik zusammen aufgetragen (Figur 1). Die Messwerte des Drucksensors sind durch Kreuze dargestellt. Die Messwerte der dem Sauerstoffpartialdruck entsprechenden Phasenänderung sind durch schwarze Vierecke dargestellt. Die Phase verändert sich bei einer Druckänderung von 0,00 zu 1,00 innerhalb von zwei Messwerten (2 x 42 ms = 84 ms), das heißt, dass die Ansprechzeit (t₉₀) zwischen den Sauerstoffpartialdrücken 33 und 200 mbar zwischen 42 und 84 ms liegt. Somit wird die dem Sauerstoffpartialdruck entsprechende Phasenänderung von der Schicht in weniger als 100 ms erreicht.

### Beispiel 3:

### Verwendung des zweischichtigen Systems zur Messung von molekularem Sauerstoff

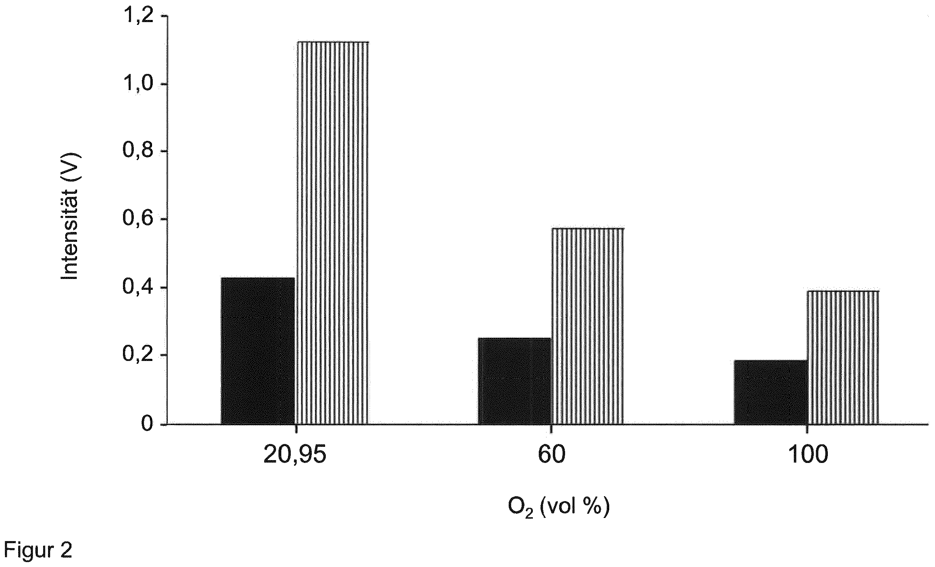

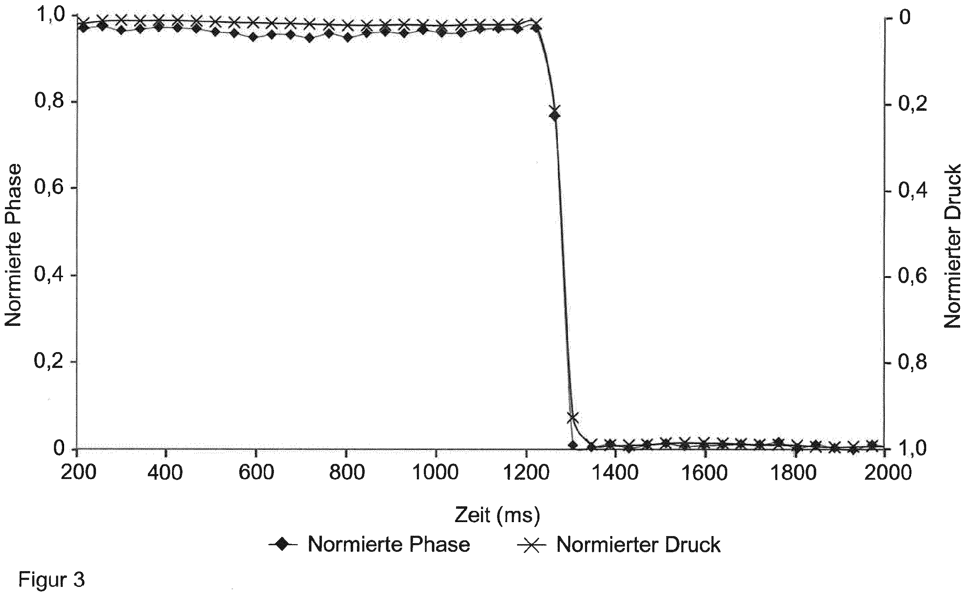

Das zweischichtige System aus Beispiel 1 wird ebenfalls für Messungen von molekularem Sauerstoff eingesetzt. Die zweite Schicht, die zugleich als Trägerfolie im Phaseninversionsverfahren eingesetzt wird, besteht aus einer porösen weißen PVdF-Membran mit einer Dicke von 130 µm, welche die Diffusion von molekularem Sauerstoff ungehindert erlaubt. Figur 2 zeigt die Verbesserung der Intensität von dem zweischichtigen System (schraffierte Balken) im Vergleich zu der einschichtigen Schicht (schwarze Balken) bei verschiedenen Sauerstoffkonzentrationen bei Raumtemperatur. Die Intensität wird in Volt gemessen. Als Detektor wird eine Photodiode verwendet. Als Anregungslichtquelle wird eine Leuchtdiode, die eine Strahlung mit einer Wellenlänge von etwa 500 nm mit einer Wiederholungsrate von 8 kHz emittiert, verwendet. Figur 3 zeigt die Bestimmung der Ansprechzeit des zweischichtigen Systems, die wie in Beispiel 2 durchgeführt wird. Die Ergebnisse zeigen, dass mit dem zweischichtigen System im Vergleich zu der einschichtigen Schicht ein Intensitätsgewinn von mehr als dem Zweifachen erreicht wird, ohne dabei die Ansprechzeit (t₉₀) zu reduzieren. Somit wird die dem Sauerstoffpartialdruck entsprechende Phasenänderung auch von dem zweischichtigen System in weniger als 100 ms erreicht.

## Patentansprüche

1. Sauerstoffdurchlässige Schicht zum Nachweis von molekularem Sauerstoff, wobei die Schicht ein Trägermaterial aufweist, wobei das Trägermaterial Polyvinylidenfluorid oder ein Copolymer von Polyvinylidenfluorid ist,
**dadurch gekennzeichnet, dass**
in dem Trägermaterial mindestens ein Partikel umfasst ist, der ein Polymer oder ein Copolymer umfasst, wobei das Polymer oder Copolymer des Partikels eine chemisch kovalent gebundene Indikatorverbindung zum Nachweis von molekularem Sauerstoff aufweist, und wobei der Partikel mechanisch in dem Trägermaterial immobilisiert ist.

2. Schicht gemäß Anspruch 1, wobei der Partikel ein Copolymer umfasst, das aus einer Indikatorverbindung als erstem Monomer und mindestens einem zweiten Monomer zusammengesetzt ist, wobei das zweite Monomer aus der Gruppe bestehend aus Styrol, einem einfach substituierten Styrol, einem mehrfach substituierten Styrol, einem Divinylbenzol, einem Alkylacrylat, einem Alkylmethacrylat, Bismethacrylat, Acrylamid, Bisacrylamid, einem Vinylsulfonamid, einem O-Vinylether und Gemischen davon ausgewählt ist.

3. Schicht gemäß Anspruch 2, wobei die Indikatorverbindung eine Verbindung der Formel (I) ist: 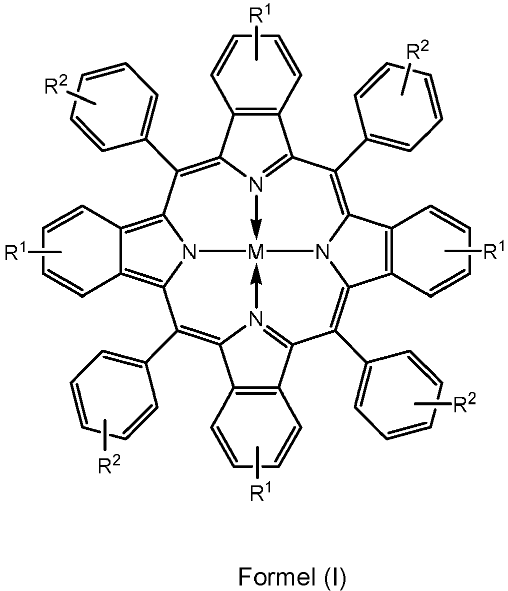 wobei
M Pd²⁺ oder Pt²⁺ ist,
R¹ jeweils CF₃ oder H ist,
R² jeweils -(CH₂)ₙ-R³ oder H ist, wobei mindestens ein R² -(CH₂)ₙ-R³ ist,
R³ jeweils ortho-Styryl, meta-Styryl, para-Styryl, Vinyl, Acrylamid, Methacrylamid, Acrylat, Methacrylat, Vinylsulfonat oder Vinylsulfonamid ist, und
n eine ganze Zahl von 0 bis 12 ist, wenn R³ Vinyl, Acrylamid, Methacrylamid, Acrylat, Methacrylat, Vinylsulfonat oder Vinylsulfonamid ist, und
n eine ganze Zahl von 1 bis 12 ist, wenn R³ ortho-Styryl, meta-Styryl oder para-Styryl ist.

4. Schicht gemäß Anspruch 2, wobei die Indikatorverbindung eine Verbindung der Formel (II) ist: 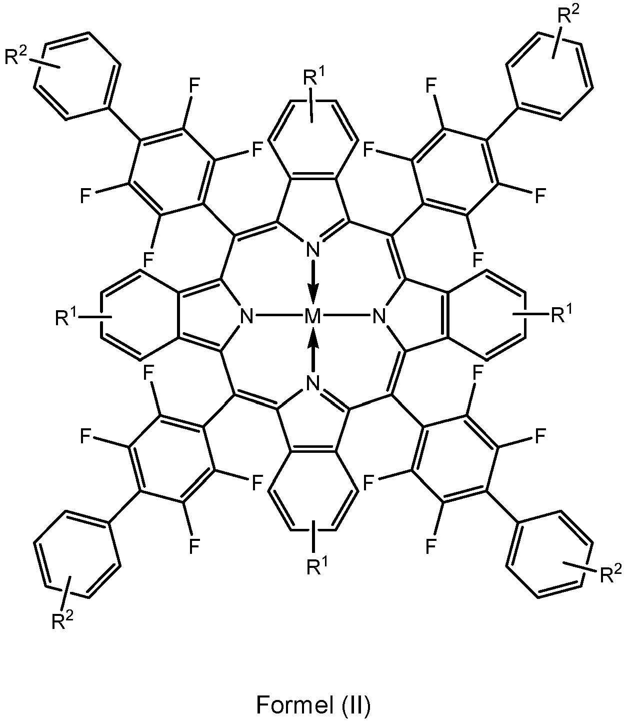 wobei
M Pd²⁺ oder Pt²⁺ ist,
R¹ jeweils CF₃ oder H ist,
R² jeweils -(CH₂)ₙ-R³ oder H ist, wobei mindestens ein R² -(CH₂)ₙ-R³ ist,
R³ jeweils ortho-Styryl, meta-Styryl, para-Styryl, Vinyl, Acrylamid, Methacrylamid, Acrylat, Methacrylat, Vinylsulfonat oder Vinylsulfonamid ist, und
n eine ganze Zahl von 1 bis 12 ist.

5. Schicht gemäß einem der Ansprüche 1 bis 4, wobei eine Vielzahl von Partikeln in dem Trägermaterial umfasst ist und die Partikel vorzugsweise homogen in dem Trägermaterial verteilt sind.

6. Mehrschichtiges System zum Nachweis von molekularem Sauerstoff, das mindestens eine erste sauerstoffdurchlässige Schicht und eine zweite sauerstoffdurchlässige Schicht umfasst, wobei die erste Schicht eine Schicht gemäß einem der Ansprüche 1 bis 5 ist und die zweite Schicht keine Indikatorverbindung zum Nachweis von molekularem Sauerstoff aufweist.

7. Mehrschichtiges System gemäß Anspruch 6, wobei die zweite Schicht aus porösem Polyvinylidenfluorid besteht.

8. Mehrschichtiges System gemäß Anspruch 6 oder 7, wobei die zweite Schicht weiß gefärbt ist.

9. Verfahren zur Herstellung der Schicht gemäß einem der Ansprüche 1 bis 5, das Verfahren umfassend die Schritte
(a) Bereitstellen eines Gemischs, das ein Trägermaterial und mindestens einen Partikel aufweist, wobei das Trägermaterial Polyvinylidenfluorid oder ein Copolymer von Polyvinylidenfluorid ist und der Partikel ein Polymer oder ein Copolymer umfasst, wobei das Polymer oder Copolymer des Partikels eine chemisch kovalent gebundene Indikatorverbindung zum Nachweis von molekularem Sauerstoff aufweist, in einem Lösungsmittel, wobei das Lösungsmittel so ausgewählt ist, dass sich das Trägermaterial im Wesentlichen darin löst, während sich die Partikel im Wesentlichen nicht darin lösen;
(b) Homogenisieren des Gemischs bei einer Temperatur von etwa 15°C bis etwa 25°C unter Rühren;
(c) Rakeln des Gemischs auf eine Trägerfolie;
(d) Präzipitieren der Schicht durch Eintauchen der Trägerfolie mit dem Rakelat aus Schritt (c) in ein Nichtlösungsmittel bei einer Temperatur von etwa 15°C bis etwa 25°C in Dunkelheit; und
(e) Trocknen der Schicht.

10. Verfahren gemäß Anspruch 9, wobei das Lösungsmittel N-Methylpyrrolidon, Dimethylacetamid, Dimethylformamid, Hexamethylphosphortriamid, Trimethylphosphat, Triethylphosphat oder Dimethylsulfoxid ist.

11. Verfahren gemäß Anspruch 9 oder 10, wobei das Nichtlösungsmittel deionisiertes Wasser, Methanol, Ethanol, Butanol oder ein Gemisch davon ist.

12. Verwendung einer Schicht gemäß einem der Ansprüche 1 bis 5 oder eines mehrschichtigen Systems gemäß einem der Ansprüche 6 bis 8 zum Nachweis von molekularem Sauerstoff.

## Claims

1. Oxygen-permeable layer for detecting molecular oxygen, the layer having a carrier material, the carrier material being polyvinylidene fluoride or a copolymer of polyvinylidene fluoride,
**characterized in that**
the carrier material comprises at least one particle which comprises a polymer or a copolymer, the polymer or copolymer of the particle having a chemically covalently bonded indicator compound for detecting molecular oxygen, and the particle being mechanically immobilized in the carrier material.

2. Layer according to claim 1, wherein the particle comprises a copolymer which is composed of an indicator compound as a first monomer and at least one second monomer, wherein the second monomer is selected from the group consisting of styrene, a monosubstituted styrene, a polysubstituted styrene, a divinylbenzene, an alkyl acrylate, an alkyl methacrylate, bismethacrylate, acrylamide, bisacrylamide, a vinyl sulfonamide, an O-vinyl ether, and mixtures thereof.

3. Layer according to claim 2, wherein the indicator compound is a compound of formula (I): 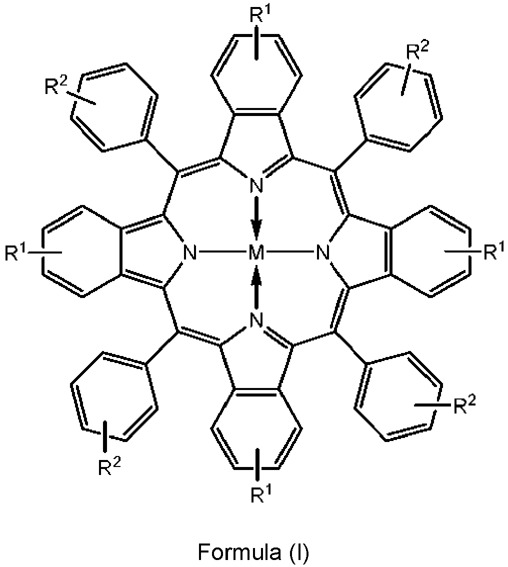 wherein
M is Pd²⁺ or Pt²⁺,
R¹ is CF₃ or H in each case,
R² is -(CH₂)ₙ-R³ or H in each case, wherein at least one R² is -(CH₂)ₙ-R³,
R³ is, in each case, ortho-styryl, meta-styryl, para-styryl, vinyl, acrylamide,
methacrylamide, acrylate, methacrylate, vinyl sulfonate or vinyl sulfonamide, and
n is an integer from 0 to 12 when R³ is vinyl, acrylamide, methacrylamide, acrylate, methacrylate, vinyl sulfonate or vinyl sulfonamide, and
n is an integer from 1 to 12 when R³ is ortho-styryl, meta-styryl, or para-styryl.

4. Layer according to claim 2, wherein the indicator compound is a compound of formula (II): 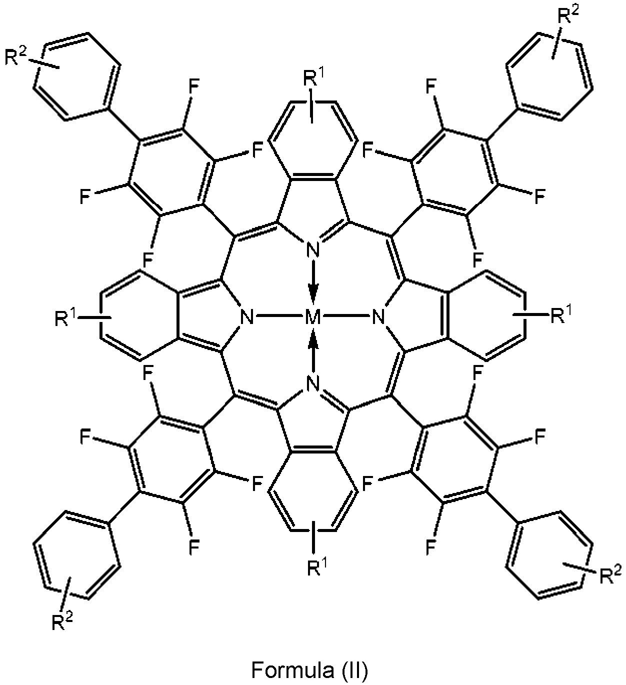 wherein
M is Pd²⁺ or Pt²⁺,
R¹ is CF₃ or H in each case,
R² is -(CH₂)ₙ-R³ or H in each case, wherein at least one R² is -(CH₂)ₙ-R³,
R³ is, in each case, ortho-styryl, meta-styryl, para-styryl, vinyl, acrylamide, methacrylamide, acrylate, methacrylate, vinyl sulfonate or vinyl sulfonamide, and n is an integer from 1 to 12.

5. Layer according to any of claims 1 to 4, wherein the carrier material comprises a plurality of particles and the particles are preferably distributed homogeneously in the carrier material.

6. Multilayer system for detecting molecular oxygen, which comprises at least one first oxygen-permeable layer and one second oxygen-permeable layer, wherein the first layer is a layer according to any of claims 1 to 5 and the second layer has no indicator compound for detecting molecular oxygen.

7. Multilayer system according to claim 6, wherein the second layer consists of porous polyvinylidene fluoride.

8. Multilayer system according to either claim 6 or claim 7, wherein the second layer is colored white.

9. Method for producing the layer according to any of claims 1 to 5, the method comprising the steps of:
(a) providing a mixture comprising a carrier material and at least one particle, wherein the carrier material is polyvinylidene fluoride or a copolymer of polyvinylidene fluoride and the particle comprises a polymer or a copolymer, wherein the polymer or copolymer of the particle is a chemically covalently bonded indicator compound for detecting molecular oxygen, in a solvent, wherein the solvent is selected such that the carrier material substantially dissolves therein while the particles substantially do not dissolve therein;
(b) homogenizing the mixture at a temperature from about 15°C to about 25°C while stirring;
(c) coating the mixture onto a carrier film with a doctor knife;
(d) precipitating the layer by dipping the carrier film with the doctor knife from step (c) in a nonsolvent at a temperature from about 15°C to about 25°C in the dark; and
(e) drying the layer.

10. Method according to claim 9, wherein the solvent is N-methylpyrrolidone, dimethylacetamide, dimethylformamide, hexamethylphosphorothamide, trimethylphosphate, triethylphosphate or dimethylsulfoxide.

11. Method according to either claim 9 or claim 10, wherein the nonsolvent is deionized water, methanol, ethanol, butanol, or a mixture thereof.

12. Use of a layer according to any of claims 1 to 5 or of a multilayer system according to any of claims 6 to 8 for detecting molecular oxygen.

## Revendications

1. Couche perméable à l'oxygène pour la détection d'oxygène moléculaire, la couche comprenant un matériau de support, le matériau de support étant le fluorure de polyvinylidène ou un copolymère de fluorure de polyvinylidène,
**caractérisée en ce que**
au moins une particule comprenant un polymère ou un copolymère est comprise dans le matériau de support, le polymère ou le copolymère de la particule ayant un composé indicateur lié chimiquement de manière covalente pour la détection d'oxygène moléculaire et la particule étant immobilisée mécaniquement dans le matériau de support.

2. Couche selon la revendication 1, dans laquelle la particule comprend un copolymère qui est constitué par un composé indicateur en tant que premier monomère et par au moins un deuxième monomère, le deuxième monomère étant choisi dans le groupe constitué par le styrène, un styrène monosubstitué, un styrène polysubstitué, un divinylbenzène, un alkylacrylate, un alkylméthacrylate, le bis-méthacrylate, l'acrylamide, le bisacrylamide, un vinylsulfonamide, un 0-viniléther et leurs mélanges.

3. Couche selon la revendication 2, dans laquelle le composé indicateur est un composé de formule (I): 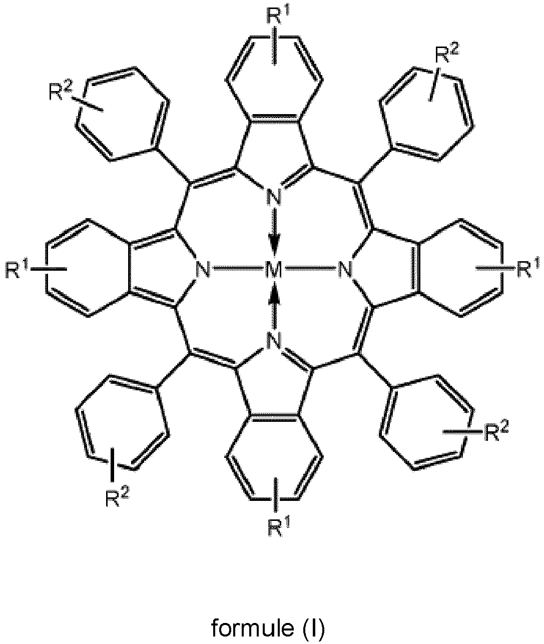 où
M est Pd²⁺ ou Pt^{2+,}
R¹ est respectivement CF₃ ou H,
R² est respectivement -(CH₂)ₙ-R³ ou H, où au moins un R² est - (CH₂)n-R³,
R³ est respectivement l'orthostyrile, le méthastyrile, le parastyrile, le vinyle, l'acrylamide, le méthacrylamide, l'acrylate, le méthacrylate, le sulfonate de vinyle ou le vinylsulfonamide et
n est un nombre entier de 0 à 12 quand R³ est le vinyle, l'acrylamide, le méthacrylamide, l'acrylate, le méthacrylate, le sulfonate de vinyle ou le vinylsulfonamide, et
n est un nombre entier compris entre 1 et 12 quand R³ est l'orthostyrile, le méthastyrile ou le parastyrile.

4. Couche selon la revendication 2, dans laquelle le composé indicateur est un composé de formule (II): 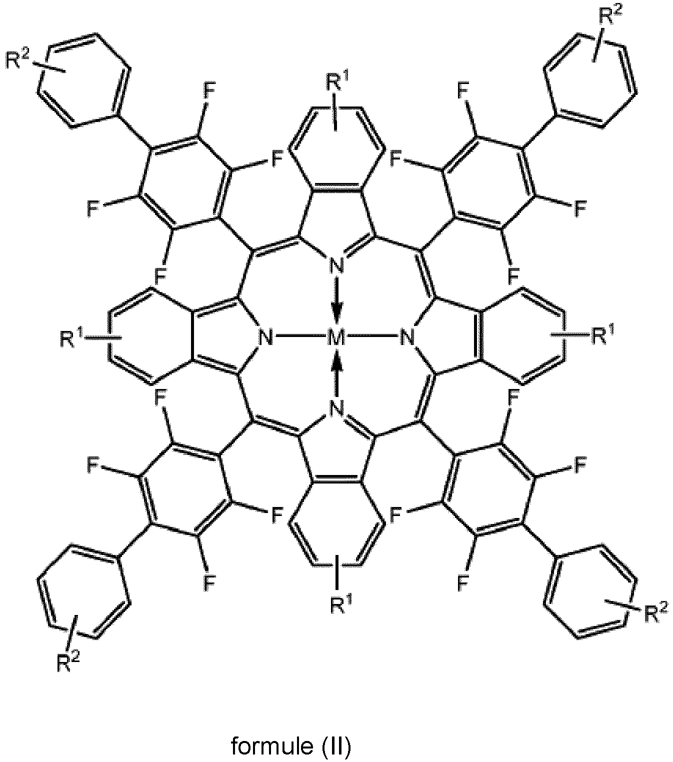 où
M est Pd²⁺ ou Pt²⁺,
R¹ est respectivement CF₃ ou H,
R² est respectivement -(CH₂)ₙ-R³ ou H, où au moins un R² est - (CH₂)n-R³,
R³ est respectivement l'orthostyrile, le méthastyrile, le parastyrile, le vinyle, l'acrylamide, le méthacrylamide, l'acrylate, le méthacrylate, le sulfonate de vinyle ou le vinylsulfonamide, et
n est un nombre entier compris entre 1 et 12.

5. Couche selon l'une quelconque des revendications 1 à 4, dans laquelle une pluralité de particules est incluse dans le matériau de support et les particules sont préférablement réparties de manière homogène dans le matériau de support.

6. Système multicouche pour la détection d'oxygène moléculaire comprenant au moins une première couche perméable à l'oxygène et une deuxième couche perméable à l'oxygène, la première couche étant une couche selon l'une quelconque des revendications 1 à 5 et la deuxième couche ne comprenant aucun composé indicateur pour la détection de l'oxygène moléculaire.

7. Système multicouche selon la revendication 6, dans lequel la deuxième couche est constituée par le fluorure de polyvinylidène poreux.

8. Système multicouche selon la revendication 6 ou 7, dans lequel la deuxième couche est de couleur blanche.

9. Procédé de fabrication de la couche selon l'une quelconque des revendications 1 à 5, le procédé comprenant les étapes de
(a) fournir un mélange comprenant un matériau de support et au moins une particule, le matériau de support étant le fluorure de polyvinylidène ou un copolymère de fluorure de polyvinylidène et la particule comprenant un polymère ou un copolymère, le polymère ou copolymère de la particule étant un composé indicateur pour la détection d'oxygène moléculaire lié chimiquement de manière covalente, dans un solvant, le solvant étant choisi de façon à ce que le matériau de support se dissolve essentiellement dans celui-ci tandis que les particules ne se dissolvent essentiellement pas dans celui-ci;
(b) homogénéiser le mélange à une température comprise entre environ 15 ° C et environ 25 ° C par agitation;
(c) revêtir à la spatule un film de support avec le mélange;
(d) précipiter la couche en plongeant le film de support avec le mélange appliqué à la spatule de l'étape (c) dans un milieu non solvant à une température comprise entre environ 15°C et environ 25°C dans l'obscurité ; et
(et) sécher la couche.

10. Procédé selon la revendication 9, dans lequel le solvant est le N-méthylpyrrolidone, le diméthylacétamide, le diméthylformamide, le triamide hexaméthylphosphorique, le triméthylphosphate, le triéthylphosphate ou le diméthylsulfoxyde.

11. Procédé selon la revendication 9 ou 10, dans lequel le milieu non solvant est l'eau déionisée, le méthanol, l'éthanol, le butanol ou leur mélange.

12. Utilisation d'une couche selon l'une quelconque des revendications 1 à 5 ou d'un système multicouche selon l'une quelconque des revendications 6 à 8 pour la détection d'oxygène moléculaire.
